# FASCICULE DE BREVET EUROPEEN

(11) **EP 4 352 751 B1**
(45) Date de publication et mention de la délivrance du brevet: **15.01.2025**
(21) Numéro de dépôt: 22735556.7
(22) Date de dépôt: 08.06.2022
(51) Int. Cl.: G21F 1/10, C08F 255/02, C08L 63/10, C08L 67/06, G21F 5/06, C08K 3/22, C08K 3/38

(54) **MATÉRIAU COMPOSITE DE BLINDAGE NEUTRONIQUE ET DE MAINTIEN DE LA SOUS-CRITICITÉ, SON PROCÉDÉ DE FABRICATION ET SES UTILISATIONS**
VERBUNDMATERIAL ZUR NEUTRONENABSCHIRMUNG UND ZUR AUFRECHTERHALTUNG DER UNTERKRITIKALITÄT, VERFAHREN ZUR HERSTELLUNG DAVON UND VERWENDUNGEN DAVON
COMPOSITE MATERIAL FOR NEUTRON SHIELDING AND FOR MAINTAINING SUBCRITICALITY, METHOD FOR MANUFACTURING SAME AND USES THEREOF

(30) Priorité: 10.06.2021 FR 2106152
(43) Date de publication de la demande: 17.04.2024
(73) Titulaire: ORANO NUCLEAR PACKAGES AND SERVICES, 78180 Montigny-le-Bretonneux (FR)
(72) Inventeur: EL EUCH, Salma, 75013 PARIS (FR); ISSARD, Hervé, 92170 VANVES (FR); NALLET, Stéphane, 78320 LE MESNIL SAINT DENIS (FR); CARON, Angèle, 78640 NEAUPHLE-LE-CHATEAU (FR)
(74) Mandataire: Brevalex
(86) Numéro de dépôt international: PCT/FR2022/051092
(87) Numéro de publication internationale: WO 2022/258927

(56) Documents cités:
- WO-A1-2020/079352
- JP-A- S57 147 095
- US-A- 3 829 532
- US-B2- 7 160 486

## Description

### DOMAINE TECHNIQUE

La présente invention se rapporte à un matériau composite de blindage neutronique et de maintien de la sous-criticité qui présente des propriétés thermomécaniques particulièrement performantes.

L'invention se rapporte également à un procédé de fabrication ainsi qu'à l'utilisation d'un tel matériau composite de blindage neutronique et de maintien de la sous-criticité, notamment dans l'industrie nucléaire et, plus particulièrement, comme pièce d'un emballage destiné au transport, à l'entreposage et/ou au stockage de matières radioactives, notamment de combustibles nucléaires.

### ÉTAT DE LA TECHNIQUE ANTERIEURE

Les matériaux composites de blindage neutronique et de maintien de la sous-criticité qui sont utilisés dans l'industrie nucléaire, en particulier ceux qui sont destinés à des emballages de matières radioactives, doivent présenter un certain nombre de propriétés de manière à répondre à un cahier des charges complexe qui est exigé pour assurer la sûreté du transport, de l'entreposage et/ou du stockage de ces emballages.

Ces matériaux composites doivent être capables de ralentir et de capturer très efficacement les neutrons, de manière à assurer un blindage efficace contre les neutrons, d'une part, et à maintenir la sous-criticité au sein de l'emballage et/ou d'un réseau d'emballages, d'autre part, pour éviter que les neutrons qui s'y forment ne provoquent de réactions nucléaires en chaîne, notamment lorsque les matières radioactives sont fissiles. Pour que ces matériaux composites soient aptes à ralentir les neutrons, de manière à pouvoir ensuite les capturer, il convient qu'ils soient fortement hydrogénés et qu'ils comprennent un composé, par exemple comprenant du bore, qui assure la capture proprement dite des neutrons.

Ces matériaux composites doivent également présenter une densité peu élevée, de manière à alourdir le moins possible les emballages auxquels ils sont destinés, et être auto-extinguibles, c'est-à-dire qu'ils doivent cesser de brûler sitôt que les flammes sont éteintes. Cette dernière caractéristique prend tout son intérêt dans le cadre de l'épreuve de feu relative aux conditions accidentelles de transport et applicable conformément à de la réglementation en vigueur auxquelles les emballages doivent être soumis.

Les formulations permettant d'obtenir ces matériaux composites doivent, en outre, pouvoir être coulées directement dans un moule ou dans une structure formant les emballages de transport, d'entreposage et/ou de stockage et permettre d'obtenir, après durcissement, des matériaux composites exempts de défaut du type vide et/ou fissures de manière à éviter tout risque de fuite neutronique.

Ces matériaux composites doivent également présenter une bonne tenue, ou résistance, au vieillissement à des températures relativement élevées en conditions normales de transport, d'entreposage et/ou de stockage. En effet, la présence de matières radioactives dans les emballages peut générer des températures importantes au sein des matériaux composites, typiquement d'au moins 130 °C, voire de l'ordre de 160 °C à 170 °C.

Les matériaux composites de blindage neutronique et de maintien de la sous-criticité qui sont utilisés dans l'industrie nucléaire sont classiquement obtenus à partir d'une formulation polymérisable comprenant une résine thermodurcissable et une charge inorganique.

En particulier, le document US 7,160,486, qui est référencé **[1]** dans la suite de la présente description, décrit un matériau composite de blindage neutronique et de maintien de la sous-criticité qui présente une résistance au vieillissement thermique à des températures d'utilisation relativement élevées, étant précisé que les températures d'utilisation correspondent aux températures auxquelles sont soumis les emballages et, partant, les matériaux composites qu'ils renferment, lors du transport, de l'entreposage et/ou du stockage sous l'effet de la température des matières radioactives qu'ils contiennent qui peut atteindre 170 °C.

Le matériau composite décrit dans le document **[1]** est obtenu à partir d'une formulation mettant en oeuvre une composition comprenant une résine vinylester et une charge inorganique capable de ralentir et d'absorber les neutrons, cette charge inorganique comprenant au moins un composé inorganique de bore et au moins un composé inorganique hydrogéné. En particulier, les pourcentages pondéraux de résine vinylester et de la charge inorganique peuvent être respectivement compris entre 25 % en poids et 40 % en poids et entre 60 % en poids et 75 % en poids, par rapport au poids total de la composition.

Le document US 7,399,431, qui est référencé **[2]** dans la suite de la présente description, décrit également un matériau composite de blindage neutronique et de maintien de la sous-criticité.

Le matériau composite décrit dans le document **[2]** est obtenu à partir d'une formulation mettant en oeuvre une composition qui comprend une résine vinylester, une charge inorganique capable de ralentir et d'absorber les neutrons et au moins un polyamide. Cette composition peut notamment comprendre de 30 % en poids à 45 % en poids de résine vinylester et de 10 % en poids à 30 % en poids de polyamide, par rapport au poids total de la composition.

Les données expérimentales montrent que le matériau composite décrit dans ce document **[2]** présente une résistance au vieillissement thermique qui, à des températures d'utilisation de 160 °C et de 170 °C, est légèrement améliorée par rapport à celle du matériau composite décrit dans le document **[1]** et ce, avec une densité moindre.

Le document JP S57 147095, qui est référencé **[3]** dans la suite de la présente description, décrit également un matériau composite de blindage neutronique se caractérisant par une résistance thermique à des températures de 150 °C ainsi qu'une résistance au feu.

Le matériau composite décrit dans le document **[3]** est obtenu à partir d'une formulation mettant en oeuvre une composition qui comprend une résine polyester insaturée halogénée, une poudre de résine synthétique à base de polyoléfine, une poudre de borate de zinc et, le cas échéant, des poudres d'hydroxyde d'aluminium et/ou d'oxyde d'antimoine. Cette composition peut notamment comprendre de 30 % en poids à 80 % en poids de résine polyester insaturée halogénée, de 5 % en poids à 30 % en poids de résine synthétique à base de polyoléfine et de 8 % en poids à 70 % en poids de telles charges inorganiques, par rapport au poids total de la composition.

Si les matériaux composites décrits dans ces documents **[1]** à **[3]** s'avèrent satisfaisants pour réaliser des pièces destinées à des emballages de stockage, d'entreposage et/ou de transport de manières radioactives et adaptées à des températures d'utilisation de 150 °C, de 160 °C, voire de 170 °C, il devient cependant nécessaire de proposer des matériaux composites qui permettent de résister à des températures d'utilisation supérieures, notamment de l'ordre de 180 °C, et qui peuvent s'inscrire dans un temps long, les durées d'entreposage et/ou de stockage des emballages sous air pouvant atteindre quarante ans.

En particulier, des tests de vieillissement thermique ont montré que le matériau composite décrit dans le document **[1]** se dégrade à des températures de 180 °C. On observe, en particulier, la formation de fissures au sein du matériau composite, de telles fissures pouvant, d'une part, fragiliser le matériau composite par oxydation sous l'effet de l'oxygène de l'air pouvant cheminer dans ces fissures et, d'autre part, engendrer des risques de fuite neutronique. Il est précisé que le terme "fissure" doit être compris comme définissant toute discontinuité bidimensionnelle ou tridimensionnelle visible à l'œil nu.

Le but de la présente invention est donc de pallier la formation, à des températures de 180 °C, de telles fissures au sein d'un matériau composite et donc de proposer un matériau composite de blindage neutronique et de maintien de la sous-criticité qui réponde à l'ensemble des exigences énoncées ci-dessus et qui présente, en outre, des propriétés thermomécaniques particulièrement performantes avec une résistance au vieillissement à des températures d'utilisation de 180 °C pour permettre d'entreposer, de stocker et/ou de transporter des chargements de matières radioactives présentant une température supérieure à 160 °C ou 170 °C.

Un autre but de la présente invention est de proposer un procédé de fabrication d'un tel matériau composite, ce procédé pouvant être facilement mis en oeuvre dans les équipements et outillages des installations industrielles actuellement utilisées pour la fabrication de matériaux composites à base de résine thermodurcissable et notamment ceux mis en oeuvre pour la fabrication des matériaux composites décrits dans les documents **[1]** à **[3].**

### EXPOSÉ DE L'INVENTION

Ces buts ainsi que d'autres encore sont atteints, en premier lieu, par un matériau composite de blindage neutronique et de maintien de la sous-criticité qui est obtenu à partir d'une formulation particulière.

Selon l'invention, cette formulation comprend :
- 100 parties en poids d'une composition comprenant, les pourcentages pondéraux étant rapportés au poids total de la composition :
   - de 30 % en poids à 45 % en poids d'une résine vinylester,
   - de 23 % en poids à 58 % en poids d'une charge inorganique, la charge inorganique comprenant au moins un composé hydrogéné et au moins un composé de bore, et
   - de 12 % en poids à 32 % en poids, d'une polyoléfine ou d'un copolymère oléfinique ;
- de 0,3 partie en poids à 1,4 partie en poids d'un initiateur de polymérisation ; et
- de 0,3 partie en poids à 1,4 partie en poids d'un accélérateur de polymérisation.

Le matériau composite de blindage neutronique et de maintien de la sous-criticité selon l'invention permet de réaliser des pièces qui sont plus particulièrement destinées aux emballages de transport, d'entreposage et/ou de stockage de matières radioactives et qui ne présentent pas de défaut et, en particulier, pas de fissures au sein de leur structure. Cette absence de fissures est observée non seulement à l'issue de la fabrication proprement dite de ces pièces mais également après avoir soumis ces pièces à des tests de vieillissement thermique réalisés à une température de 180 °C. Les risques de dégradation du matériau composite par oxydation et/ou d'éventuelles fuites neutroniques à partir d'un tel matériau composite sont ainsi totalement écartés. De plus, et de manière inattendue et surprenante, après ces tests de vieillissement thermique, les pièces se caractérisent par une couche d'oxydation superficielle particulièrement limitée et qui n'évolue que très peu dans le temps.

Le matériau de blindage neutronique et de maintien de la sous-criticité selon l'invention présente, en outre, l'avantage d'être particulièrement intéressant d'un point de vue économique, les composés mis en oeuvre pour le fabriquer étant disponibles et ce, à coût maîtrisé.

Le matériau composite de blindage neutronique et de maintien de la sous-criticité est obtenu à partir d'une formulation qui comprend 100 parties en poids d'une composition particulière auxquelles sont ajoutées de 0,3 partie en poids à 1,4 partie en poids d'un initiateur de polymérisation et de 0,3 partie en poids à 1,4 partie en poids d'un accélérateur de polymérisation.

Cette composition particulière comprend :
- de 30 % en poids à 45 % en poids d'une résine thermodurcissable vinylester,
- de 23 % en poids à 58 % en poids d'une charge inorganique, la charge inorganique comprenant au moins un composé hydrogéné et au moins un composé de bore, et
- de 12 % en poids à 32 % en poids, d'une polyoléfine ou d'un copolymère oléfinique.

Il est précisé que l'expression "de... à..." qui vient d'être citée et qui est utilisée dans la présente demande doit être comprise comme définissant non seulement les valeurs de l'intervalle, mais également les valeurs des bornes de cet intervalle.

La résine thermodurcissable est une résine vinylester.

Selon l'invention, la résine thermodurcissable est une résine vinylester. Le choix d'une résine vinylester permet d'améliorer encore, s'il en était besoin, la résistance au vieillissement thermique à des températures élevées du matériau composite de blindage neutronique et de maintien de la sous-criticité obtenu à partir d'une formulation comprenant une telle résine.

La résine polyester résulte classiquement de la polycondensation d'au moins un acide dicarboxylique ou d'au moins un de ses dérivés, tel qu'un anhydride d'acide carboxylique ou un diester, avec un composé organique comportant deux groupes hydroxyle (glycol ou diol) ou plus (polyol).

Dans une variante qui ne fait pas partie de l'invention, la résine polyester est insaturée et résulte de la polycondensation d'un acide dicarboxylique avec un glycol, l'un au moins de ces composés comportant une liaison éthylénique susceptible de réagir ultérieurement avec un composé vinylique, acrylique ou allylique.

Dans cette variante qui ne fait pas partie de l'invention, on peut notamment utiliser les résines polyester obtenues :
- à partir d'acides dicarboxyliques ou anhydrides, saturés tels que l'acide adipique, l'acide isophtalique, l'acide orthophtalique, l'acide téréphtalique et l'anhydride orthophtalique, ou
- à partir d'acides dicarboxyliques, ou anhydrides, insaturés tels que l'acide maléique, l'acide fumarique, l'acide citraconique, l'acide métaconique, l'acide itaconique et l'anhydride maléique, et
- de glycols tels que le propylène glycol (propane-1,2-diol), le propane-1,3-diol, le dipropylène glycol, le diéthylène glycol, le néopentyl glycol et le bisphénol A, ou
- de glycols oxyéthylés ou oxypropylés du type éthylène glycol oxyéthyléné.

Dans une variante préférentielle, qui ne fait pas partie de l'invention, la résine polyester n'est pas halogénée, contrairement à la résine polyester mise en oeuvre dans la formulation à partir de laquelle est obtenu le matériau composite décrit dans le document [3]. L'emploi d'une résine polyester non halogénée permet de limiter les risques pour la santé des opérateurs et pour l'environnement.

Dans une variante plus préférentielle, qui ne fait pas partie de l'invention, la résine polyester est choisie parmi les résines polyester obtenues à partir, d'une part, d'acide maléique, d'acide isophtalique, d'acide orthophtalique ou d'acide fumarique et, d'autre part, d'un des glycols qui viennent d'être cités, à savoir le propylène glycol, le propane-1,3-diol, le dipropylène glycol, le diéthylène glycol, le néopentyl glycol ou le bisphénol A.

Plus préférentiellement, selon cette variante, qui ne fait pas partie de l'invention, la résine polyester est choisie parmi les résines polyester obtenues à partir :
- d'acide maléique et de propylène glycol,
- d'acide isophtalique et de néopentyl glycol,
- d'acide orthophtalique et de néopentyl glycol,
- d'acide fumarique et de bisphénol A, et
- d'acide fumarique et de propane-1,3-diol.

La résine vinylester peut résulter quant à elle de l'estérification d'une ou plusieurs résines époxydes avec un acide carboxylique insaturé. La résine époxyde peut présenter un motif macromoléculaire de type bisphénol A ou de type novolaque. L'acide carboxylique insaturé peut être choisi parmi l'acide acrylique et l'acide méthacrylique, l'acide méthacrylique étant avantageux car plus riche en hydrogène.

Selon une variante avantageuse, la résine vinylester est choisie dans le groupe constitué par les résines époxyacrylates et époxyméthacrylates de type bisphénol A, les résines époxyacrylates et époxyméthacrylates de type novolaque, les résines époxyacrylates et époxyméthacrylates à base de bisphénol A halogénées et les mélanges de deux ou plusieurs de celles-ci.

La résine vinylester peut également être une résine vinylester non époxyde résultant de la réaction d'un polyester isophtalique avec un uréthanne.

Des résines vinylester convenant pour la préparation de la composition mise en oeuvre dans le cadre de la présente invention peuvent notamment être les résines vinylester décrites dans les documents **[1]** et **[2]** et, plus particulièrement, les résines vinylester qui répondent aux formules semi-développées notées (I) à (IV) dans le document **[2].**

Dans une variante préférentielle, la résine vinylester comprend une résine époxyde de type novolaque.

De telles résines vinylester sont notamment commercialisées sous les dénominations Derakane Momentum^{™}470-300 et Derakane^{™}470HT-400 par la société Ineos.

Comme indiqué précédemment, la composition comprend de 30 % en poids à 45 % en poids de résine thermodurcissable, par rapport au poids total de celle-ci.

Selon une variante avantageuse, et de manière à optimiser la coulabilité de la formulation en vue de son durcissement, le pourcentage pondéral de résine thermodurcissable dans la composition est de 32 % en poids à 45 % en poids, préférentiellement de 35 % en poids à 44 % en poids, par rapport au poids total de cette composition.

En particulier, lorsque la résine thermodurcissable est une résine vinylester, la coulabilité optimale est obtenue avec un pourcentage pondéral de résine vinylester dans la composition allant de 40 % en poids à 45 % en poids, par rapport au poids total de la composition.

La composition mise en oeuvre dans le cadre de la présente invention comprend également de 23 % en poids à 58 % en poids, par rapport au poids total de la composition, d'une charge inorganique particulière.

Cette charge inorganique particulière comprend au moins un composé hydrogéné et au moins un composé de bore.

Le ou les composés inorganiques hydrogénés, dont le rôle est de ralentir les neutrons, peuvent être choisis parmi les hydroxydes et notamment parmi l'hydroxyde de magnésium Mg(OH)₂ et les hydrates d'alumine Al(OH)₃ ou AIO(OH).

Les hydrates d'alumine Al(OH)₃ et AlO(OH) sont plus particulièrement préférés dans le sens où ces composés hydrogénés confèrent, en outre, des propriétés d'autoextinguibilité particulièrement performantes au matériau composite selon l'invention.

Le ou les composés inorganiques de bore, dont le rôle est d'absorber les neutrons une fois ralentis par le ou les composés inorganiques hydrogénés, peuvent notamment être choisis parmi l'acide borique H₃BO₃, la colémanite Ca₂O₁₄B₆H₁₀, les borates de zinc tels que 2ZnO.3B₂O₃.3,5H₂O, 4ZnO.B₂O₃.H₂O, 2ZnO.3B₂O₃ et 3ZnO.2B₂O₃, le carbure de bore B₄C, le nitrure de bore BN et l'oxyde de bore B₂O₃.

Dans une variante de l'invention, le ou les composés inorganiques de bore comprennent également de l'hydrogène, ce qui a pour effet d'améliorer les propriétés d'autoextinguibilité du matériau composite selon l'invention. De tels composés de bore hydrogénés peuvent avantageusement être choisis parmi les borates de zinc hydratés tels que 2ZnO.3B₂O₃.3,5H₂O ou encore 4ZnO.B₂O₃.H₂O.

Comme déjà indiqué précédemment, la composition comprend de 23 % en poids à 58 % en poids de charge inorganique, par rapport au poids total de celle-ci.

Selon une variante avantageuse, le pourcentage pondéral de charge inorganique dans la composition est de 30 % en poids à 50 % en poids, par rapport au poids total de cette composition.

Selon une variante préférentielle, le pourcentage pondéral de charge inorganique dans la composition est de 32 % en poids à 44 % en poids, par rapport au poids total de cette composition.

Les pourcentages pondéraux en composés inorganiques hydrogénés, d'une part, et de bore, d'autre part, peuvent être avantageusement adaptés en fonction des propriétés, parmi les propriétés de blindage et/ou de sous-criticité, qui sont recherchées pour le matériau composite considéré.

Dans une variante de l'invention, la composition comprend, par rapport au poids total de cette composition :
- de 20 % en poids à 55 % en poids, avantageusement de 25 % en poids à 45 % en poids et, préférentiellement, de 27 % en poids à 38 % en poids d'un ou plusieurs composés hydrogénés, et
- de 3 % en poids à 28 % en poids, avantageusement de 5 % en poids à 15 % en poids et, préférentiellement, de 6 % en poids à 9 % en poids d'un ou plusieurs composés de bore.

Dans un mode de réalisation particulier, la charge inorganique comprenant au moins un composé hydrogéné et au moins un composé de bore se présentent sous une forme divisée, par exemple sous la forme de granulés, de grains, de billes, de poudres, de paillettes..., que l'on désigne ci-après par le terme générique de particules.

Dans une variante particulière, cette charge inorganique se présente sous la forme de particules dont la plus grande dimension est au plus égale à 5 mm, la taille de ces particules étant mesurée par diffraction laser.

Cette plus grande dimension des particules de charge inorganique peut notamment être comprise entre 1 µm et 1 mm, avantageusement comprise entre 5 µm et 500 µm et, de préférence, comprise entre 10 µm et 200 µm.

La composition mise en oeuvre dans le cadre de la présente invention comprend, en outre, de 12 % en poids à 32 % en poids, par rapport au poids total de la composition, d'un polymère thermoplastique choisi parmi une polyoléfine et un copolymère oléfinique.

La polyoléfine est avantageusement choisie parmi un polyéthylène (PE) et un polypropylène (PP) et est, de préférence, un polyéthylène (PE).

Le copolymère oléfinique est un polymère issu de la copolymérisation d'au moins deux monomères distincts, l'un de ces monomères étant un monomère oléfinique.

Le copolymère oléfinique est avantageusement un copolymère d'éthylène et d'acétate de vinyle (EVA).

Comme on le verra dans les exemples ci-après, les pourcentages pondéraux sélectionnés pour chacun des composés formant la composition permettent de préparer une formulation qui, après durcissement, conduit à l'obtention d'un matériau composite qui répond à l'ensemble des exigences requises pour un matériau de blindage neutronique et de maintien de la sous-criticité (ralentissement des neutrons, capture de ces derniers, autoextinguibilité, faible densité...) et qui présente, en outre, une résistance au vieillissement thermique performante à une température d'utilisation de 180 °C.

En particulier, il est à noter qu'un pourcentage pondéral de polyoléfine ou de copolymère oléfinique inférieur à 12 % en poids, par rapport au poids total de la composition, conduit à l'obtention de matériaux composites présentant des fissures visibles à l'œil nu à l'issue d'un test de vieillissement thermique conduit à 180 °C. De même, un pourcentage pondéral de polyoléfine ou de copolymère oléfinique supérieur à 32 % en poids, par rapport au poids total de la composition, conduit à l'obtention de matériaux composites qui ne répondent plus au critère d'autoextinguibilité.

Selon une variante avantageuse, le pourcentage pondéral de polyoléfine ou de copolymère oléfinique dans la composition est de 15 % en poids à 29 % en poids, préférentiellement de 16 % en poids à 28 % en poids, par rapport au poids total de cette composition.

Dans une variante de l'invention, la polyoléfine ou le copolymère oléfinique se présente sous forme de particules, c'est-à-dire sous une forme divisée comme ce qui a été précédemment décrit pour la charge inorganique.

Dans une variante avantageuse, au moins 50 % en nombre des particules de polyoléfine ou de copolymère oléfinique possèdent une taille moyenne, notée dso, allant de 10 µm à 150 µm et, de préférence, de 30 µm à 120 µm, cette taille moyenne de particules étant mesurée par diffraction laser.

La composition qui vient d'être décrite peut également comprendre, en outre, un ou plusieurs additifs tels que, par exemple, un agent limitateur de chaîne, un agent de transfert de chaîne, un agent d'ajustement de la vitesse de polymérisation de la formulation, un agent ignifugeant, un agent antioxydant, un colorant et/ou un pigment.

La formulation permettant d'obtenir le matériau composite selon l'invention comprend, pour 100 parties en poids de la composition qui vient d'être décrite :
- de 0,3 partie en poids à 1,4 partie en poids d'un initiateur de polymérisation, et
- de 0,3 partie en poids à 1,4 partie en poids d'un accélérateur de polymérisation.

L'initiateur de polymérisation, dont la fonction est d'assurer le démarrage de la polymérisation de la formulation, peut être choisi parmi les peroxydes organiques tandis que l'accélérateur de polymérisation, dont la fonction est d'accélérer cette polymérisation, peut être choisi parmi les sels de cobalt.

La mise en oeuvre de plusieurs initiateurs de polymérisation et/ou de plusieurs accélérateurs de polymérisation est tout à fait envisageable. Il est toutefois précisé que les intervalles de proportions pondérales définis ci-dessus pour l'initiateur de polymérisation et l'accélérateur de polymérisation s'appliquent, qu'il y ait un seul ou plusieurs initiateurs de polymérisation et/ou un seul ou plusieurs accélérateurs de polymérisation.

En particulier, la mise en oeuvre de deux accélérateurs de polymérisation sera illustrée dans l'exposé détaillé de modes de réalisation particuliers qui suit.

La présente invention se rapporte, en deuxième lieu, à un procédé de fabrication d'un matériau composite de blindage neutronique et de maintien de la sous-criticité à partir de la formulation telle que décrite ci-dessus.

Selon l'invention, ce procédé comprend les étapes (1) à (3) successives suivantes :
(1) la préparation d'une composition obtenue par mélange des composés suivants, les pourcentages pondéraux étant rapportés au poids total de la composition :
   - de 30 % en poids à 45 % en poids d'une résine vinylester,
   - de 23 % en poids à 58 % en poids d'une charge inorganique, la charge inorganique comprenant au moins un composé hydrogéné et au moins un composé de bore, et
   - de 12 % en poids à 32 % en poids d'une polyoléfine ou d'un copolymère oléfinique ;
(2) la préparation d'une formulation obtenue par mélange de :
   - 100 parties en poids de la composition préparée à l'étape (1),
   - de 0,3 partie en poids à 1,4 partie en poids d'un initiateur de polymérisation, et
   - de 0,3 partie en poids à 1,4 partie en poids d'un accélérateur de polymérisation ; et
(3) le moulage de la formulation préparée à l'étape (2).

Le procédé de fabrication selon l'invention est donc un procédé dont la mise en oeuvre est particulièrement simple, rapide et économique. Le procédé selon l'invention permet d'obtenir un matériau composite de forme (design) spécifiquement adaptée à l'emballage auquel il est destiné. Ce procédé peut, en outre, être facilement mis en oeuvre dans les installations actuellement dédiées aux procédés de fabrication de matériaux composites tels que ceux décrits dans les documents **[1]** à **[3].**

Les caractéristiques décrites précédemment en liaison avec la composition et, notamment, les caractéristiques relatives à la résine thermodurcissable, à la charge inorganique (composés hydrogénés et de bore), à la polyoléfine ou au copolymère oléfinique, à l'initiateur de polymérisation, à l'accélérateur de polymérisation et aux additifs éventuels, sont bien entendu applicables au présent procédé de fabrication du matériau composite.

L'étape (1) du procédé de fabrication selon l'invention, qui permet de préparer la composition décrite ci-dessus, est réalisée par mélange de l'ensemble des composés entrant dans la composition, à savoir la résine vinylester, la charge inorganique comprenant au moins un composé hydrogéné et au moins un composé de bore, la polyoléfine ou le copolymère oléfinique, et le ou les additifs éventuels.

L'étape (2) du procédé de fabrication selon l'invention, qui permet de préparer la formulation décrite ci-dessus, est réalisée par mélange de la composition obtenue à l'issue de l'étape (1), de l'initiateur de polymérisation et de l'accélérateur de polymérisation.

L'initiateur de polymérisation et l'accélérateur de polymérisation pouvant être introduits, dans la composition, simultanément ou bien successivement. Dans ce dernier cas, l'initiateur de polymérisation est alors introduit en dernier lieu.

Les mélanges opérés dans les étapes (1) et (2) du procédé de fabrication selon l'invention peuvent être réalisés manuellement ou bien au moyen d'un mélangeur.

L'étape (3) du procédé de fabrication, qui permet d'obtenir le matériau composite de blindage neutronique et de maintien de la sous-criticité selon l'invention, est réalisée par moulage de la formulation obtenue à l'issue de l'étape (2).

Dans une première variante, cette formulation peut être coulée dans un moule.

Dans une seconde variante de l'invention, cette formulation peut être coulée directement dans l'emballage destiné au transport, à l'entreposage et/ou au stockage de matières radioactives. Un tel emballage peut, par exemple, comporter des logements périphériques dans lesquels est coulée la formulation obtenue à l'issue de l'étape (2).

L'étape (3) de moulage de la formulation telle qu'obtenue à l'issue de l'étape (2) s'effectue avantageusement à la température ambiante, c'est-à-dire qu'elle peut être réalisée à une température comprise entre 18 °C et 25 °C.

À l'issue de cette étape (3) de moulage, au cours de laquelle se produit la polymérisation de la formulation, on obtient le matériau composite de blindage neutronique et de maintien de la sous-criticité selon l'invention.

Le mécanisme de cette réaction de polymérisation est radicalaire.

La présente invention se rapporte, en troisième lieu, à l'utilisation du matériau composite de blindage neutronique et de maintien de la sous-criticité tel que défini ci-dessus, les caractéristiques avantageuses de ce matériau composite pouvant être prises seules ou en combinaison.

Le matériau composite selon l'invention peut notamment être utilisé pour la fabrication d'une pièce d'un emballage destiné au transport, à l'entreposage et/ou au stockage de matières radioactives.

L'invention se rapporte, en quatrième lieu, à un emballage de transport, d'entreposage et/ou de stockage de matières radioactives.

Selon l'invention, cet emballage de transport, d'entreposage et/ou de stockage de matières radioactives comprend un matériau composite de blindage neutronique et de maintien de la sous-criticité tel que défini ci-dessus, les caractéristiques avantageuses de ce matériau composite pouvant être prises seules ou en combinaison.

D'autres avantages et caractéristiques de la présente invention ressortiront plus clairement de la description qui suit, qui se rapporte à des exemples de fabrication de matériaux composites conformes à l'invention et de matériaux de référence dont un matériau composite obtenu à partir d'une composition conforme à celle décrite dans les documents **[1]** et **[2]** et deux matériaux composites obtenus à partir d'une composition du type de celle décrite dans le document **[3],** ainsi qu'à l'évaluation de leurs propriétés thermomécaniques respectives.

Bien entendu, ces modes de réalisation particuliers de l'invention ne sont donnés qu'à titre d'illustration de l'objet de l'invention et ne constituent, en aucun cas, une limitation de cet objet.

### BRÈVE DESCRIPTION DES DESSINS

Les figures 1A, 1B et 1C correspondent respectivement aux clichés photographiques des plaques de matériaux composites M2, M3 et M4' telles qu'obtenues à l'issue du cycle thermique mis en oeuvre pour évaluer leur résistance à un vieillissement thermique conduit à 180 °C.
Les figures 2A et 2B correspondent respectivement aux clichés pris au moyen d'un microscope électronique à balayage (MEB) d'une section des plaques de matériaux composites M1 et M4 telles qu'obtenues à l'issue du cycle thermique mis en oeuvre pour évaluer leur résistance à un vieillissement thermique conduit à 180 °C.

### EXPOSÉ DÉTAILLÉ DE MODES DE RÉALISATION PARTICULIERS

### -A- Obtention des matériaux composites M1 à M8 et M4'

Les formulations F1 à F8 et F4' à partir desquelles ont été obtenus les matériaux composites M4, M4' et M5 à M7 selon l'invention ainsi que les matériaux composites M1 à M3 et M8 de référence ont été préparées à partir des compositions C1 à C8 et C4' décrites ci-après.

### Composés mis en oeuvre

Les composés utilisés pour la préparation des compositions C1 à C8 et C4' sont les suivants :
- comme résine thermodurcissable :
   - une résine vinylester comprenant une résine époxyde de type novolaque commercialisée par la société Ineos sous la dénomination Derakane^{™} Momentum 470-300 (noté 470-300), et
   - une résine vinylester comprenant une résine époxyde de type novolaque commercialisée par la société Ineos sous la dénomination Derakane^{™} 470HT-400 (noté 470HT-400) ;
- comme polyoléfine : un polyéthylène haute densité commercialisé par la société Celanese sous la dénomination Gur^{®}4050-3-PE-UHMW, noté PEHD, qui se présente sous la forme d'une poudre dont les particules présentent une caractéristique granulométrique dso de 60 µm telle que mesurée par diffraction laser ; et
- comme charge inorganique :
   - comme composé hydrogéné : un hydrate d'alumine Al(OH)₃, noté ATH, commercialisé par la société Nabaltec sous la dénomination Apyral^{®}20X qui se présente sous la forme d'une poudre dont les particules présentent une taille moyenne de 8 µm telle que mesurée par diffraction laser, et
   - comme composé de bore : un borate de zinc 2ZnO.3B₂O₃.3,5H₂O commercialisé par la société Borax sous la dénomination Firebrake^{®}ZB qui se présente sous la forme d'une poudre dont les particules présentent une taille moyenne de 9 µm telle que mesurée par diffraction laser.

### Préparation des compositions C1 à C8 et C4'

Les compositions C1 à C8 et C4' ont été préparées par mélange d'une résine vinylester, de la polyoléfine, du composé hydrogéné et du composé de bore mentionnés ci-dessus dans les pourcentages pondéraux indiqués dans le Tableau 1 ci-dessous.

Il est précisé que la composition C1 est identique à la composition de l'exemple 2 du document **[1]** ainsi qu'à la composition ayant conduit au matériau composite dit "matériau de référence" exemplifié dans le document **[2].**

Les compositions C2 et C3 sont des compositions du type de celles décrites dans le document **[3],** étant toutefois précisé que la résine thermodurcissable mise en oeuvre est ici une résine vinylester et non une résine polyester insaturée halogénée comme décrit dans ce document **[3].**

### Préparation des formulations F1 à F8 et F4'

Les formulations F1 à F8 et F4' ont été préparées par introduction puis mélange, dans chacune des compositions C1 à C8 et C4', d'un système catalytique comprenant, pour 100 parties en poids de la composition considérée :
- 0,676 partie en poids d'un initiateur de polymérisation formé par un hydroperoxyde de cumyle commercialisé par la société Nouryon sous la dénomination Trigonox K-90,
- 0,768 partie en poids d'un accélérateur de polymérisation formé par un 2-éthylhexanoate de cobalt(II) commercialisé par la société Nouryon sous la dénomination Accelerator NL-49PN, et
- 0,192 partie en poids d'un co-accélérateur de polymérisation formé par un *N,N-*diéthylacétoacétamide commercialisé par la société Akzo Nobel sous la dénomination Promotor D.

### Obtention des matériaux composites M1 à M8 et M4'

Chacune des formulations F1 à F8 et F4' obtenue a été dégazée sous vide puis coulée, à la température ambiante (21 °C), dans un moule.

Il a été observé que, bien que ces formulations F1 à F8 et F4' présentent toutes une bonne coulabilité, la viscosité de celles-ci augmente avec les pourcentages pondéraux de polyéthylène (PEHD) et d'hydrate d'alumine (ATH).

Après durcissement de chacune des formulations F1 à F8 et F4' à la température ambiante (21 °C) pendant une durée comprise entre 10 min et 40 min, les matériaux composites M1 à M8 et M4' ont été respectivement obtenus.

### -B- Évaluation des propriétés des matériaux composites

### Résistance au vieillissement thermique à 180 °C

La résistance au vieillissement thermique des matériaux composites M1 à M8 et M4' à une température d'utilisation de 180 °C a été évaluée en plaçant des échantillons se présentant sous la forme de plaques carrées de 12 cm de côté et de 10 mm d'épaisseur de chacun de ces matériaux composites M1 à M8 et M4' dans un four et en les soumettant à un cycle thermique comprenant les étapes (a) à (d) successives suivantes :
(a) une première montée en température de la température ambiante (25 °C) à une première température de palier de 80 °C, à une vitesse de 10 °C/h,
(b) un maintien de la température à cette première température de palier de 80 °C pendant 8 h,
(c) une seconde montée en température de cette première température de palier de 80 °C à une seconde température de palier de 180 °C, à une vitesse de 10 °C/h, et
(d) un maintien de la température à cette seconde température de palier de 180 °C pendant 24 h.

À l'issue de l'étape (d), les plaques ont été extraites du four et refroidies à la température ambiante.

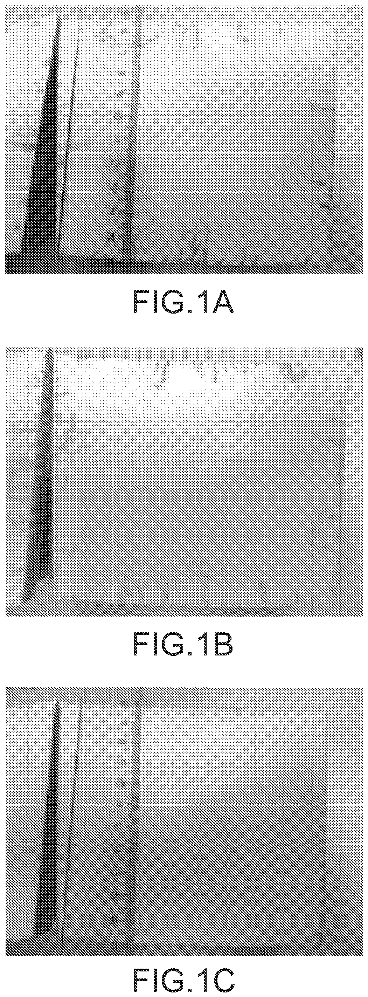

Comme le montrent les clichés photographiques des Figures 1A à 1C, les plaques en matériaux composites M2 (figure 1A), d'une part, et M3 (figure 1B), d'autre part, présentent de nombreuses fissures qui sont visibles à l'œil nu, contrairement à la plaque en matériau composite M4' (figure 1C) qui en est totalement dépourvue.

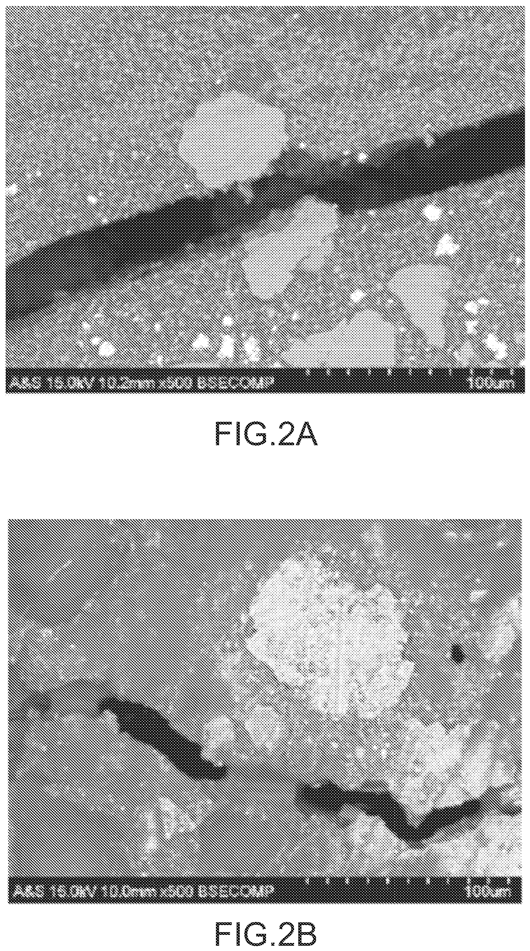

En se reportant au cliché MEB de la figure 2B, on observe que la fissure présente dans la plaque en matériau composite M4 est partiellement comblée. Ces comblements sont formés par du polyéthylène qui est présent dans la formulation F4 et qui a fondu lors du cycle thermique de manière à former des ponts au niveau des fissures. Ces ponts présentent l'avantage de limiter le cheminement de l'oxygène de l'air dans ces fissures ainsi que d'éviter la propagation de ces même fissures, contrairement à ce que l'on peut observer sur le cliché MEB de la figure 2A qui montre une fissure plus importante, et notamment plus large que celle de la figure 2B, et en outre non comblée, et donc susceptible de se propager, au sein du matériau composite M1 qui est conforme au matériau composite de l'exemple 2 du document **[1]** et au matériau composite dit "matériau de référence" décrit dans le document **[2].**

### Autoextinguibilité

Des tests d'autoextinguibilité ont été conduits sur les matériaux composites M1 à M8 et M4' pour évaluer leur comportement en conditions accidentelles de feu.

Ces tests ont été réalisés en disposant des échantillons de matériaux composites M1 à M8 et M4' dans un feu à 800 °C pendant 30 min. Au terme de ces 30 min, les flammes ont été éteintes et on a observé si chacun des matériaux composites M1 à M8 et M4' a immédiatement ou non cessé de brûler.

Les résultats de ces tests, qui sont consignés dans le tableau 1 ci-dessous, montrent que les matériaux composites M1 à M7 et M4' ont cessé de brûler à l'extinction des flammes, contrairement au matériau composite M8 qui n'a cessé de brûler qu'après 32 s comptées à partir de l'extinction des flammes.

**Tableau 1**

| **Composition** | **C1** | **C2** | **C3** | **C4'** | **C4** | **C5** | **C6** | **C7** | **C8** |
|---|---|---|---|---|---|---|---|---|---|
| 470-300 (en %) | 32 | 40 | 32 | | 40 | 40 | 35 | 35 | 40 |
| 470HT-400 (en %) | | | | 40 | | | | | |
| PEHD (en %) | 0 | 5 | 10 | 18 | 18 | 24 | 29 | 32 | 35 |
| ATH (en %) | 62 | 49 | 52 | 36 | 36 | 30 | 30 | 27 | 19 |
| Borate de zinc (en %) | 6 | 6 | 6 | 6 | 6 | 6 | 6 | 6 | 6 |
| Charge inorganique (en%) | 68 | 55 | 58 | 42 | 42 | 36 | 36 | 33 | 25 |

| **Matériau composite** | **M1** | **M2** | **M3** | **M4'** | **M4** | **M5** | **M6** | **M7** | **M8** |
|---|---|---|---|---|---|---|---|---|---|
| Densité théorique (en g/cm³) | 1,79 | 1,55 | 1,57 | 1,37 | 1,41 | 1,33 | 1,32 | 1,29 | 1,22 |
| Fissures à l'œil nu | oui | oui | oui | non | non | non | non | non | non |
| Autoextinguibilité | oui | oui | oui | oui | oui | oui | oui | oui | non |

On observe donc qu'à partir d'un pourcentage pondéral en polyéthylène qui est supérieur à 32 % en poids dans la composition, et qui est notamment égal à 35 % en poids comme dans le cas de la composition C8, le matériau composite M8 ne répond plus à l'un au moins des critères du cahier des charges des matériaux composites de blindage neutronique et de maintien de la sous-criticité, en l'espèce celui de l'autoextinguibilité.

### BIBLIOGRAPHIE

**[1]** US 7,160,486 B2
**[2]** US 7,399,431 B2
**[3]** JP S57 147095 A

## Revendications

1. Matériau composite de blindage neutronique et de maintien de la sous-criticité obtenu à partir d'une formulation comprenant :
- 100 parties en poids d'une composition comprenant, les pourcentages pondéraux étant rapportés au poids total de la composition :
. de 30 % en poids à 45 % en poids, avantageusement de 32 % en poids à 45 % en poids et, préférentiellement de 35 % en poids à 44 % en poids, d'une résine vinylester,
. de 23 % en poids à 58 % en poids, avantageusement de 30 % en poids à 50 % en poids et, préférentiellement, de 32 % en poids à 44 % en poids, d'une charge inorganique, la charge inorganique comprenant au moins un composé hydrogéné et au moins un composé de bore, et
. de 12 % en poids à 32 % en poids, avantageusement de 15 % en poids à 29 % en poids et, préférentiellement, de 16 % en poids à 28 % en poids, d'une polyoléfine ou d'un copolymère oléfinique ;
- de 0,3 partie en poids à 1,4 partie en poids d'un initiateur de polymérisation ; et
- de 0,3 partie en poids à 1,4 partie en poids d'un accélérateur de polymérisation.

2. Matériau composite selon la revendication 1, dans lequel la résine vinylester est choisie dans le groupe constitué par les résines époxyacrylates et époxyméthacrylates de type bisphénol A, les résines époxyacrylates et époxyméthacrylates de type novolaque, les résines époxyacrylates et époxyméthacrylates à base de bisphénol A halogénées et les mélanges de deux ou plusieurs de celles-ci.

3. Matériau composite selon la revendication 1 ou 2, dans lequel la composition comprend de 35 % en poids à 45 % en poids et, avantageusement, de 40 % en poids à 45 % en poids, de résine vinylester, par rapport au poids total de la composition.

4. Matériau composite selon l'une quelconque des revendications 1 à 3, dans lequel la composition comprend, par rapport au poids total de la composition :
- de 20 % en poids à 55 % en poids, avantageusement de 25 % en poids à 45 % en poids et, préférentiellement, de 27 % en poids à 38 % en poids, d'un ou plusieurs composés hydrogénés, et
- de 3 % en poids à 28 % en poids, avantageusement de 5 % en poids à 15 % en poids et, préférentiellement, de 6 % en poids à 9 % en poids, d'un ou plusieurs composés de bore.

5. Matériau composite selon l'une quelconque des revendications 1 à 4, dans lequel
- le ou les composés hydrogénés sont choisis parmi les hydroxydes, par exemple Mg(OH)₂, Al(OH)₃ et AlO(OH), le composé hydrogéné étant de préférence Al(OH)₃ ou AIO(OH), et/ou
- le ou les composés de bore sont choisis parmi H₃BO₃, Ca₂O₁₄B₆H₁₀, les borates de zinc, B₄C, BN et B₂O₃.

6. Matériau composite selon l'une quelconque des revendications 1 à 5, dans lequel le ou les composés de bore comprennent de l'hydrogène et sont avantageusement choisis parmi les borates de zinc hydratés tels que 4ZnO,6B₂O₃,7H₂O ou 4ZnO,B₂O₃, H₂O.

7. Matériau composite selon l'une quelconque des revendications 1 à 6, dans lequel le copolymère oléfinique est un copolymère d'éthylène et d'acétate de vinyle et la polyoléfine est choisie parmi un polyéthylène et un polypropylène, la polyoléfine étant, de préférence, un polyéthylène.

8. Matériau composite selon l'une quelconque des revendications 1 à 7, dans lequel la polyoléfine ou le copolymère oléfinique se présente sous la forme de particules, ces particules présentant avantageusement une taille moyenne en nombre d₅₀ allant de 10 µm à 150 µm et, de préférence, de 30 µm à 120 µm.

9. Procédé de fabrication d'un matériau composite de blindage neutronique et de maintien de la sous-criticité selon l'une quelconque des revendications 1 à 8, ce procédé comprenant les étapes (1) à (3) successives suivantes :
(1) la préparation d'une composition obtenue par mélange des composés suivants, les pourcentages pondéraux étant rapportés au poids total de la composition :
. de 30 % en poids à 45 % en poids d'une résine vinylester,
. de 23 % en poids à 58 % en poids d'une charge inorganique, la charge inorganique comprenant au moins un composé hydrogéné et au moins un composé de bore, et
. de 12 % en poids à 32 % en poids d'une polyoléfine ou d'un copolymère oléfinique ;
(2) la préparation d'une formulation obtenue par mélange de :
- 100 parties en poids de la composition préparée à l'étape (1),
- de 0,3 partie en poids à 1,4 partie en poids d'un initiateur de polymérisation, et
- de 0,3 partie en poids à 1,4 partie en poids d'un accélérateur de polymérisation ; et
(3) le moulage de la formulation préparée à l'étape (2).

10. Procédé de fabrication selon la revendication 9, dans lequel l'étape (3) de moulage est réalisée à une température comprise entre 18 °C et 25 °C.

11. Utilisation d'un matériau composite de blindage neutronique et de maintien de la sous-criticité selon l'une quelconque des revendications 1 à 8 pour la fabrication d'une pièce d'un emballage destiné au transport, à l'entreposage et/ou au stockage de matières radioactives.

12. Emballage de transport, d'entreposage et/ou de stockage de matières radioactives comprenant un matériau composite de blindage neutronique et de maintien de la sous-criticité selon l'une quelconque des revendications 1 à 8.

## Patentansprüche

1. Verbundmaterial zur Neutronenabschirmung und zur Aufrechterhaltung der Unterkritikalität, das aus einer Formulierung erhalten wird, die Folgendes umfasst:
- 100 Gewichtsteile einer Zusammensetzung, die Folgendes enthält, wobei sich die Gewichtsprozente auf das Gesamtgewicht der Zusammensetzung beziehen:
• 30 Gew.-% bis 45 Gew.-%, vorteilhafterweise 32 Gew.-% bis 45 Gew.-% und vorzugsweise 35 Gew.-% bis 44 Gew.-% eines Vinylesterharzes,
• 23 Gew.-% bis 58 Gew.-%, vorteilhafterweise 30 Gew.-% bis 50 Gew.-% und vorzugsweise 32 Gew.-% bis 44 Gew.-% eines anorganischen Füllstoffs, wobei der anorganische Füllstoff mindestens eine hydrierte Verbindung und mindestens eine Borverbindung umfasst, und
• 12 Gew.-% bis 32 Gew.-%, vorteilhafterweise 15 Gew.-% bis 29 Gew.-% und vorzugsweise 16 Gew.-% bis 28 Gew.-% eines Polyolefins oder eines olefinischen Copolymers;
- 0,3 Gewichtsteile bis 1,4 Gewichtsteile eines Polymerisationsinitiators; und
- 0,3 Gewichtsteile bis 1,4 Gewichtsteile eines Polymerisationsbeschleunigers.

2. Verbundmaterial nach Anspruch 1, wobei das Vinylesterharz aus der Gruppe ausgewählt ist, die aus Epoxyacrylat- und Epoxymethacrylatharzen vom Bisphenol-A-Typ, Epoxyacrylat- und Epoxymethacrylatharzen vom Novolak-Typ, halogenierten Epoxyacrylat- und Epoxymethacrylatharzen auf Bisphenol-A-Basis und Mischungen von zwei oder mehreren davon besteht.

3. Verbundmaterial nach Anspruch 1 oder 2, wobei die Zusammensetzung bezogen auf das Gesamtgewicht der Zusammensetzung 35 Gew.-% bis 45 Gew.-% und vorteilhafterweise 40 Gew.-% bis 45 Gew.-% Vinylesterharz umfasst.

4. Verbundmaterial nach einem der Ansprüche 1 bis 3, wobei die Zusammensetzung bezogen auf das Gesamtgewicht der Zusammensetzung Folgendes umfasst:
- 20 Gew.-% bis 55 Gew.-%, vorteilhafterweise 25 Gew.-% bis 45 Gew.-% und vorzugsweise 27 Gew.-% bis 38 Gew.-% einer oder mehrerer hydrierter Verbindungen und
- 3 Gew.-% bis 28 Gew.-%, vorteilhafterweise 5 Gew.-% bis 15 Gew.-% und vorzugsweise 6 Gew.-% bis 9 Gew.-% einer oder mehrerer Borverbindungen.

5. Verbundmaterial nach einem der Ansprüche 1 bis 4, wobei
- die hydrierte(n) Verbindung(en) aus Hydroxiden, z. B. Mg(OH)₂, Al(OH)₃ und AlO(OH), ausgewählt sind, wobei es sich bei der hydrierten Verbindung bevorzugt um Al(OH)₃ oder AlO(OH) handelt, und/oder
- die Borverbindung(en) aus H₃BO₃, Ca₂O₁₄B₆H₁₀, Zinkboraten, B₄C, BN und B₂O₃ ausgewählt sind.

6. Verbundmaterial nach einem der Ansprüche 1 bis 5, wobei die Borverbindung(en) Wasserstoff umfassen und vorteilhafterweise aus hydratisierten Zinkboraten wie 4ZnO,6B₂O₃,7H₂O oder 4ZnO,B₂O₃, H₂O ausgewählt sind.

7. Verbundmaterial nach einem der Ansprüche 1 bis 6, wobei das olefinische Copolymer ein Copolymer aus Ethylen und Vinylacetat ist und das Polyolefin aus Polyethylen und Polypropylen ausgewählt ist, wobei das Polyolefin bevorzugt ein Polyethylen ist.

8. Verbundmaterial nach einem der Ansprüche 1 bis 7, wobei das Polyolefin oder das olefinische Copolymer in Form von Partikeln vorliegt, wobei diese Partikel vorteilhafterweise eine zahlenmittlere Größe d50so im Bereich von 10 µm bis 150 µm und bevorzugt von 30 µm bis 120 µm aufweisen.

9. Verfahren zur Herstellung eines Verbundmaterials zur Neutronenabschirmung und zur Aufrechterhaltung der Unterkritikalität nach einem der Ansprüche 1 bis 8, wobei dieses Verfahren die folgenden aufeinanderfolgenden Schritte (1) bis (3) umfasst:
(1) die Herstellung einer Zusammensetzung, die durch Mischen der folgenden Verbindungen erhalten wird, wobei die Gewichtsprozente auf das Gesamtgewicht der Zusammensetzung bezogen sind:
• 30 Gew.-% bis 45 Gew.-% eines Vinylesterharzes,
• 23 Gew.-% bis 58 Gew.-% eines anorganischen Füllstoffs, wobei der anorganische Füllstoff mindestens eine hydrierte Verbindung und mindestens eine Borverbindung umfasst, und
• 12 Gew.-% bis 32 Gew.-% eines Polyolefins oder eines olefinischen Copolymers;
(2) die Herstellung einer Formulierung, die erhalten wird durch Mischen von:
- 100 Gewichtsteilen der in Schritt (1) hergestellten Zusammensetzung,
- 0,3 Gewichtsteilen bis 1,4 Gewichtsteilen eines Polymerisationsinitators und
- 0,3 Gewichtsteilen bis 1,4 Gewichtsteilen eines Polymerisationsbeschleunigers; und
(3) Formen der in Schritt (2) hergestellten Formulierung.

10. Herstellungsverfahren nach Anspruch 9, wobei der Schritt (3) des Formens bei einer Temperatur zwischen 18 °C und 25 °C durchgeführt wird.

11. Verwendung eines Verbundmaterials zur Neutronenabschirmung und zur Aufrechterhaltung der Unterkritikalität nach einem der Ansprüche 1 bis 8 für die Herstellung eines Teils einer Verpackung, die für den Transport, die Lagerung und/oder die Aufbewahrung von radioaktiven Stoffen bestimmt ist.

12. Verpackung für den Transport, die Lagerung und/oder die Aufbewahrung von radioaktiven Stoffen, die ein Verbundmaterial zur Neutronenabschirmung und zur Aufrechterhaltung der Unterkritikalität nach einem der Ansprüche 1 bis 8 umfasst.

## Claims

1. A composite material for neutron shielding and for maintaining sub-criticality obtained from a formulation comprising:
- 100 portions by weight of a composition comprising, the weight percentages being based on the total weight of the composition:
. from 30% by weight to 45% by weight, advantageously from 32% by weight to 45% by weight and, preferably from 35% by weight to 44% by weight, of a vinylester resin,
. from 23% by weight to 58% by weight, advantageously from 30% by weight to 50% by weight and, preferably, from 32% by weight to 44% by weight, of an inorganic filler, the inorganic filler comprising at least one hydrogenated compound and at least one boron compound, and
. from 12% by weight to 32% by weight, advantageously from 15% by weight to 29% by weight and, preferentially, from 16% by weight to 28% by weight, of a polyolefin or of an olefin copolymer;
- from 0.3 portion by weight to 1.4 portion by weight of a polymerisation initiator; and
- from 0.3 portion by weight to 1.4 portion by weight of a polymerisation accelerator.

2. The composite material according to claim 1, wherein the vinylester resin is selected from the group consisting of epoxyacrylate and epoxymethacrylate resins of the bisphenol A type, epoxyacrylate and epoxymethacrylate resins of the novolac type, epoxyacrylate and epoxymethacrylate resins based on halogenated bisphenol A and mixtures of two or more thereof.

3. The composite material according to claim 1 or 2, wherein the composition comprises from 35% by weight to 45% by weight and, advantageously, from 40% by weight to 45% by weight, of vinylester resin, relative to the total weight of the composition.

4. The composite material according to any one of claims 1 to 3, wherein the composition comprises, relative to the total weight of the composition:
- from 20% by weight to 55% by weight, advantageously from 25% by weight to 45% by weight and, preferably, from 27% by weight to 38% by weight of one or more hydrogenated compounds, and
- from 3% by weight to 28% by weight, advantageously from 5% by weight to 15% by weight and, preferably, from 6% by weight to 9% by weight of one or more boron compounds.

5. The composite material according to any one of claims 1 to 4, wherein
- the hydrogenated compound(s) are selected from hydroxides, for example Mg(OH)₂, Al(OH)₃ and AlO(OH), the hydrogenated compound preferably being Al(OH)₃ or AlO(OH), and/or
- the boron compound(s) are selected from H₃BO₃, Ca₂O₁₄B₆H₁₀, zinc borates, B₄C, BN and B₂O₃.

6. The composite material according to any one of claims 1 to 5, wherein the boron compound(s) comprise hydrogen and are advantageously selected from hydrated zinc borates such as 4ZnO.6B₂O₃,7H₂O or 4ZnO.B₂O₃,H₂O.

7. The composite material according to any one of claims 1 to 6, wherein the olefin copolymer is an ethylene and vinyl acetate copolymer and the polyolefin is selected from a polyethylene and a polypropylene, the polyolefin preferably being a polyethylene.

8. The composite material according to any one of claims 1 to 7, wherein the polyolefin or the olefin copolymer is in the form of particles, these particles advantageously having an average size in number dso ranging from 10 µm to 150 µm and, preferably, from 30 µm to 120 µm.

9. A method for manufacturing a composite material for neutron shielding and for maintaining sub-criticality according to any one of claims 1 to 8, this method comprising the following successive steps (1) to (3):
(1) preparing a composition obtained by mixing the following compounds, the weight percentages being based on the total weight of the composition:
. from 30% by weight to 45% by weight of a vinylester resin,
. from 23% by weight to 58% by weight of an inorganic filler, the inorganic filler comprising at least one hydrogenated compound and at least one boron compound, and
. from 12% by weight to 32% by weight of a polyolefin or of an olefin copolymer;
(2) preparing a formulation obtained by mixing:
- 100 portions by weight of the composition prepared in step (1),
- from 0.3 portion by weight to 1.4 portion by weight of a polymerisation initiator, and
- from 0.3 portion by weight to 1.4 portion by weight of a polymerisation accelerator; and
(3) moulding the formulation prepared in step (2).

10. The manufacturing method according to claim 9, wherein step (3) of moulding is carried out at a temperature comprised between 18°C and 25°C.

11. A use of a composite material for neutron shielding and for maintaining sub-criticality according to any one of claims 1 to 8 for the manufacture of a part of a package intended for the transport, warehousing and/or storage of radioactive materials.

12. A package for the transport, warehousing and/or storage of radioactive materials comprising a composite material for neutron shielding and for maintaining sub-criticality according to any one of claims 1 to 8.
